# EUROPEAN PATENT SPECIFICATION

(11) **EP 4 695 712 B1**
(45) Date of publication and mention of the grant of the patent: **02.09.2026**
(21) Application number: 24740493.2
(22) Date of filing: 01.07.2024
(51) Int. Cl.: G06F 21/62, H04W 12/02

(54) **INFORMATION EXCHANGE BETWEEN NETWORK DOMAINS**
INFORMATIONSAUSTAUSCH ZWISCHEN NETZWERKDOMÄNEN
ÉCHANGE D'INFORMATION ENTRE DOMAINES DE RÉSEAUX

(30) Priority: 04.07.2023 FI 20235789
(43) Date of publication of application: 18.02.2026
(73) Proprietor: Elisa Oyj, 00520 Helsinki (FI)
(72) Inventor: RUUTU, Ville, 00520 Helsinki (FI); RUUTU, Jussi, 00520 Helsinki (FI); RASTAS, Ari, 00520 Helsinki (FI)
(74) Representative: Laine IP Oy
(86) International application number: PCT/FI2024/050367
(87) International publication number: WO 2025/008571

(56) References cited:
- US-A1- 2019 020 687
- US-A1- 2019 354 709
- US-A1- 2020 110 900
- US-B1- 9 177 174
- US-B2- 11 128 471

## Description

### FIELD

The present disclosure relates to network domains and more specifically, to information exchange between network domains.

### BACKGROUND

Sensitive information, such as authentication and/or confidential information of a user, may need to be exchanged between network domains. However, a challenge is that if said sensitive information is sent via another network domain that is not secure enough, it should be ensured that security of said sensitive information is not compromised. There is therefore a need in general to provide enhancements for information exchange between network domains, in particular to enable secure exchange of sensitive information of the user.

US 2019/020687 A1 presents systems and methods for protecting contents and accounts.

### SUMMARY

According to some aspects, there is provided the subject-matter of the independent claims. Some embodiments are defined in the dependent claims.

According to a first aspect of the present disclosure, there is provided a method comprising determining, by a first apparatus, sensitive information of a user and an identifier associated with said sensitive information, wherein the first apparatus is located in a first network domain of an organization, transmitting, by the first apparatus, the identifier associated with said sensitive information to a network domain of another organization, receiving by the first apparatus, from a second apparatus located in a second network domain of the organization, a request to get said sensitive information, the request comprising the identifier associated with said sensitive information and transmitting by the first apparatus, responsive to receiving the request, said sensitive information to the second apparatus, wherein the network domain of said another organization is classified by the first apparatus as less secure than the first and the second network domains of the organization.

According to a second aspect of the present disclosure, there is provided a method comprising receiving from a first apparatus located in a first network domain of an organization, by a second apparatus located in a second network domain of the organization, an identifier associated with sensitive information of a user, wherein the identifier associated with said sensitive information is received via a network domain of another organization, transmitting, by the second apparatus, to the first network domain of the organization, a request to get said sensitive information, the request comprising the identifier associated with said sensitive information and receiving by the second apparatus, responsive to transmitting the request, said sensitive information from the first apparatus, wherein the network domain of said another organization is classified by the second apparatus as less secure than the first and the second network domains of the organization.

According to a third aspect of the present disclosure, there is provided an apparatus comprising at least one processing core and at least one memory storing instructions that, when executed by the at least one processing core, cause the apparatus at least to determine sensitive information of a user and an identifier associated with said sensitive information, wherein first apparatus is located in a first network domain of an organization, transmit the identifier associated with said sensitive information to a network domain of another organization, receive, from a second apparatus located in a second network domain of the organization, a request to get said sensitive information, the request comprising the identifier associated with said sensitive information and transmit, responsive to receiving the request, said sensitive information to the second apparatus, wherein the network domain of said another organization is classified by the apparatus as less secure than the first and the second network domains of the organization.

According to a fourth aspect of the present disclosure, there is provided an apparatus comprising at least one processing core and at least one memory storing instructions that, when executed by the at least one processing core, cause the apparatus at least to receive from a first apparatus located in a first network domain of an organization an identifier associated with sensitive information of a user, wherein the identifier associated with said sensitive information is received via a network domain of another organization, transmit to the first network domain of the organization, a request to get said sensitive information, the request comprising the identifier associated with said sensitive information and receive, responsive to transmitting the request, said sensitive information from the first apparatus, wherein the network domain of said another organization is classified by the apparatus as less secure than the first and the second network domains of the organization.

According to a fifth aspect of the present disclosure, there is provided a computer program comprising instructions which, when the program is executed by an apparatus, cause the apparatus to carry out determining sensitive information of a user and an identifier associated with said sensitive information, wherein first apparatus is located in a first network domain of an organization, transmitting the identifier associated with said sensitive information to a network domain of another organization, receiving, from a second apparatus located in a second network domain of the organization, a request to get said sensitive information, the request comprising the identifier associated with said sensitive information and transmitting, responsive to receiving the request, said sensitive information to the second apparatus, wherein the network domain of said another organization classified by the apparatus is less secure than the first and the second network domains of the organization.

According to a sixth aspect of the present disclosure, there is provided a computer program comprising instructions which, when the program is executed by an apparatus, cause the apparatus to carry out receiving from a first apparatus located in a first network domain of an organization an identifier associated with sensitive information of a user, wherein the identifier associated with said sensitive information is received via a network domain of another organization, transmitting to the first network domain of the organization, a request to get said sensitive information, the request comprising the identifier associated with said sensitive information and receiving, responsive to transmitting the request, said sensitive information from the first apparatus, wherein the network domain of said another organization is classified by the apparatus as less secure than the first and the second network domains of the organization.

According to a seventh aspect of the present disclosure, there is provided a non-transitory computer readable medium having stored thereon a set of computer readable instructions that, when executed by at least one processor, cause an apparatus to determine sensitive information of a user and an identifier associated with said sensitive information, wherein first apparatus is located in a first network domain of an organization, transmit the identifier associated with said sensitive information to a network domain of another organization, receive, from a second apparatus located in a second network domain of the organization, a request to get said sensitive information, the request comprising the identifier associated with said sensitive information and transmit, responsive to receiving the request, said sensitive information to the second apparatus, wherein the network domain of said another organization classified by the apparatus is less secure than the first and the second network domains of the organization.

According to an eighth aspect of the present disclosure, there is provided a non-transitory computer readable medium having stored thereon a set of computer readable instructions that, when executed by at least one processor, cause an apparatus to receive from a first apparatus located in a first network domain of an organization an identifier associated with sensitive information of a user, wherein the identifier associated with said sensitive information is received via a network domain of another organization, transmit to the first network domain of the organization, a request to get said sensitive information, the request comprising the identifier associated with said sensitive information and receive, responsive to transmitting the request, said sensitive information from the first apparatus, wherein the network domain of said another organization is classified by the apparatus as less secure than the first and the second network domains of the organization.

### BRIEF DESCRIPTION OF THE DRAWINGS

FIG. 1 illustrates an example network scenario in accordance with at least some embodiments;
FIG. 2 illustrates an example of a signalling graph in accordance with at least some embodiments;
FIG. 3 illustrates an example apparatus capable of supporting at least some embodiments;
FIG. 4 is a flow graph of a first method in accordance with at least some embodiments;
FIG. 5 is a flow graph of a second method in accordance with at least some embodiments.

### EMBODIMENTS

Information exchange between domains may be enhanced by the procedures described herein. More specifically, security of sensitive information, such as authentication and/or confidential information of a user, may be enhanced. A user may be authenticated using, e.g., strong authentication, and an identifier may be determined. Strong authentication may be defined, for example, as authentication that is legally acceptable to determine an identity of a user, i.e., a person. Confidential information may comprise, for example, information about health of the person, political views of the person, etc.

The identifier is thus associated with sensitive information of the user, i.e., the identifier may be used to identify said sensitive information of the user. The identifier is then transmitted from a first secure network domain to a second secure network domain via a less secure network domain. After that said sensitive information of the user is requested from the first secure network domain. The request comprises the identifier. Said sensitive information may be then directly transmitted to the second secure network domain. Hence, security of said sensitive information is not compromised.

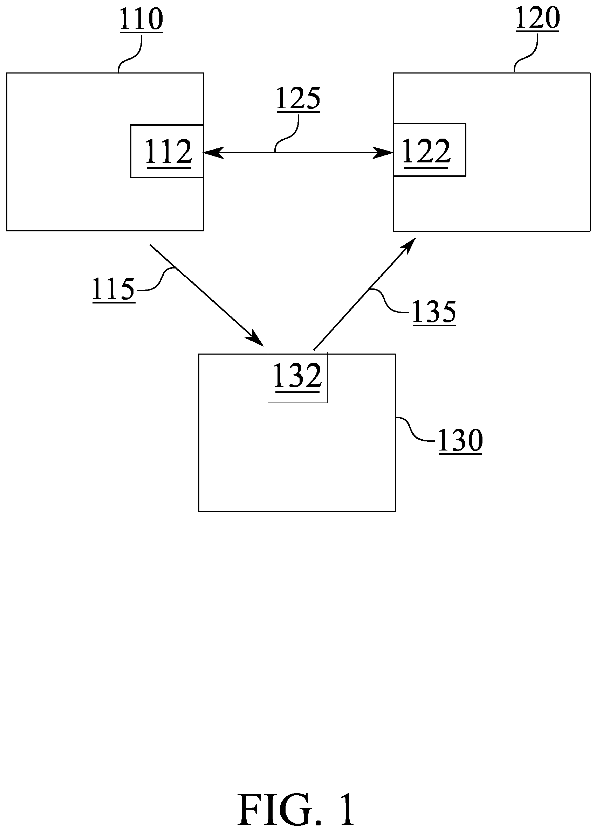

FIG. 1 illustrates an example network scenario in accordance with at least some embodiments. The example network scenario of FIG.1 comprises first network domain 110 of an organization, second network domain 120 of the organization and network domain 130 of another organization. First apparatus 112 is located in first network domain 110 of the organization, second apparatus 122 is located in second network domain 120 of the organization and third apparatus 132 is located in third network domain 130. The organization may provide for example a chat service, such as, for example, SaaS. Said another organization may be for example an operator of a cellular communication network. Network domain 130 of said another organization is less secure than first network domain 110 and second network domain 120 of said another organization. Security level of first network domain 110 and second network domain 120 of said another organization may be the same. By security level it may be meant, for example, that an interface between two domains is cryptographically secured.

In some embodiments, first apparatus 112 and/or second apparatus 122 may classify third network domain 130 as less secure than first network domain 110 and second network domain 120. For example, first apparatus 112 and/or second apparatus 122 may detect that third network domain 130 belongs to a third party and is hence less secure.

First apparatus 112 of the organization may communicate with third apparatus 132, i.e., the apparatus of said another organization, via interface 115. Interface 115 is a communication interface. Interface 115 may refer to, e.g., Internet. That is, first apparatus 112 of the organization may communicate with third apparatus 132 via the Internet. In some embodiments, a third party may thus communicate with first domain 110 and second domain 120 of the organization via the Internet. Alternatively, a third party may communicate via a dedicated corporation network interface. Third apparatus 132 may communicate with second apparatus 122 of the organization via interface 135. Interface 135 may refer to, e.g., a network of a corporation. First apparatus 112 of the organization may communicate with second apparatus 122 of the organization via interface 125. Interface 125 may refer to, e.g., an internal network of the organization. In general, communicating refers to transmitting and receiving.

In case of digital services, identification of a user is important as more and more issues are handled via Internet. Also, handling of sensitive information increases. Sensitive information comprises sensitive data and hence, it needs to be handled in a secure manner. Sensitive information may comprise, for example, secret material usable in cryptographic authentication processes. In some embodiments, sensitive information may comprise authentication and/or confidential information of a user.

On the other hand, organizations may use network services provided by different partner organizations. An organization may even use various hybrid models, wherein a part of an information technology service environment is under control of the organization itself and other parts are under control of another organization, possibly in the cloud. Another organization may refer, e.g., to a company, public organization or a university.

There may be situations, wherein the organization wants to exploit services provided by its partners. However, sensitive information needs to be protected as efficiently as possible, in particularly in situations wherein said sensitive information is transmitted between a secure network domain, like first network domain 110 and/or second network domain 120 of the organization, and less secure network domain, like network domain 130 of said another organization.

For example, a user may be authenticated and identified on a webpage of the organization using strong digital authentication. After that, the user may start a chat-session on the webpage with a customer service of the organization. The chat-session may be provided by an external partner of the organization. Sensitive information of the user would need to be attached to the chat-session, so that a customer service agent would know who the user is.

Transmission of said sensitive information to a third party, e.g., to a network domain 130 of said another organization, may diminish security though. For example, said sensitive information might be stored in logs at the third party.

Embodiments of the present disclosure therefore enable secure sharing of said sensitive information of the user between secure network domains, wherein said sensitive information is shared via a less secure network domain. Instead of sharing said sensitive information itself, an identifier may be transmitted from one secure network domain to another secure network domain via a less secure network domain. For example, the identifier may be transmitted from first network domain 110 to second network domain 120 via third network domain 130.

The identifier may explicitly associate said sensitive information with a certain communication session, such as a chat-session. The identifier may further enable fetching of said sensitive information of the user by an apparatus of said another secure network domain receiving the identifier from the less secure network domain. However, an apparatus in the less secure network domain would not be able to access said sensitive information of the user using the identifier, as said sensitive information needs to be fetched from an apparatus in said secure domain.

The identifier may be associated with the communication session in various ways. For example, the identifier may be associated with the session by transferring the identifier within the session, storing a session-identifier correspondence information, forming the identifier from an identity of the session or using an algorithm, such as a hash algorithm. Hence, an apparatus in the receiving domain may receive the identifier within the session, fetch the session-identifier correspondence information, form the identifier from the identity of the session or use the algorithm. If the identifier is formed, for example, from the identity of the session, the identifier associated with said sensitive information may comprise the identity of the session. In such a case, the identifier associated with said sensitive information may be transmitted from second domain 120 to first domain 110, to get said sensitive information.

In some embodiments, the identifier may have a lifetime or a number of times said sensitive information may be fetched may be limited. Alternatively, or in addition, the identifier may be encrypted.

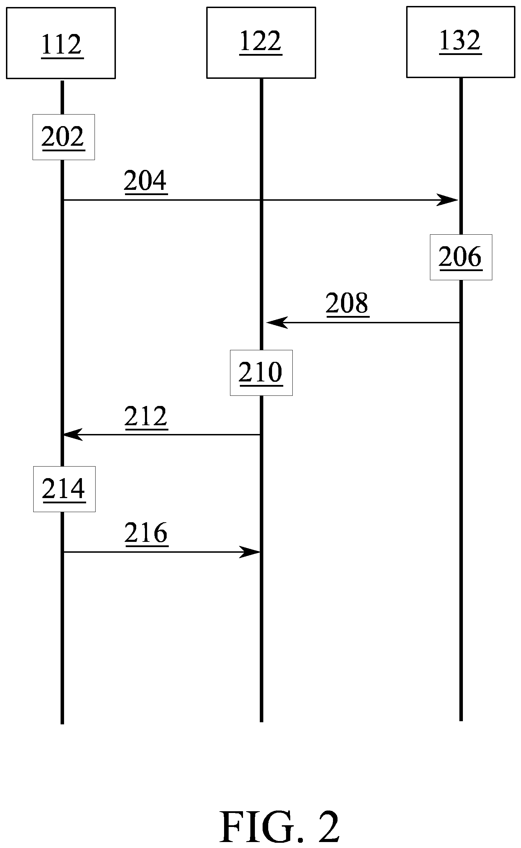

FIG. 2 illustrates a signalling graph in accordance with at least some example embodiments. On the vertical axes are disposed, from the left to the right, first apparatus 112, second apparatus 122 and third apparatus 132 of FIG. 1. Time advances from the top towards the bottom. For example, sensitive information, such as strong authentication information of the user, may be exchanged via a chat-session according to the example of FIG. 2.

At step 202, first apparatus 112 located in first network domain 110 of an organization, determines sensitive information of a user and an identifier associated with said sensitive information. The user may be for example a client. The client may access a webpage of the organization and authenticate using strong authentication. For example, a bank identifier may be used. First apparatus 112 may be configured to provide the webpage and receive said sensitive information from the user, or the user's device, via the webpage. The webpage hence is provided within a secure network domain, as it is maintained by the organization of first apparatus 112. The user may hence be associated with an interaction session, such as a chat session, video session or browser call session, with said another organization. Interaction session may refer to a session started by a user. Communication session on the other hand may refer to communication between apparatuses within the same organization.

In some embodiments, first apparatus 112 may also provide a chat-widget of a chat-session on the webpage. The user may then start a chat-session using the chat-widget on the webpage.

At step 204, first apparatus 112 transmits the identifier associated with said sensitive information to third apparatus 132 located in network domain 130 of another organization. The identifier is transmitted to network domain 130 so that it may be forwarded to second network domain 120. For example, first apparatus 112 may start, via a network domain of another organization, a communication session with second apparatus 122 located in second network domain 120 of the organization and transmit the identifier using the communication session. The identifier may be transmitted when the communication session is formed, during an establishment process of the communication session, or during the communication session. The communication session may be, for example, a chat-session, a call, etc. First apparatus 112 may transmit the identifier to network domain 130 of said another organization over the Internet.

In some embodiments, first apparatus 112 may transmit the identifier associated with said sensitive information to the network domain of another organization, e.g., to third apparatus 132, via the chat widget of the chat-session. The chat-session may be provided by said another organization. That is, the chat-session may be a service provided by a third party, such said another organization, wherein said another organization may be less secure than the organization of first network domain 110 and second network domain. That is, said another organization may be less trusted by the organization.

The chat-widget of the chat-service may belong to network domain 130 of said another organization similarly as a chat user interface used by an agent. The agent may access the chat user interface via second network domain 120, e.g., second apparatus 122 may be configured to provide the chat user interface for the agent. The chat-widget may contact the chat-service provided by network domain 130 form the chat-session and the identifier may be forwarded along with the chat-session. Customer service in second network domain 120 may use a customer information system, which communicates with the chat user interface. Customer service and the customer information system may be maintained by the organization and hence located in second secure network domain 120.

At step 206, third apparatus 132 may determine to forward the identifier. Third apparatus 132 may transmit the identifier to second apparatus 122 via the chat-session, for example. Third apparatus 132 may, for example, transmit the identifier to the chat user interface and the agent may forward the identifier to customer information system.

At step 208, third apparatus 132 may transmit the identifier to second apparatus 122. Second apparatus 122 may hence receive from first apparatus 112 the identifier associated with said sensitive information of the user, wherein the identifier is received via network domain 130 of said another organization. In some embodiments, second apparatus 122 may request the identifier from third apparatus 132, if for example second apparatus 122 determines that there is a need to get said sensitive information. For example, a customer service agent may decide, depending on the customer, that said sensitive information is needed. The customer service agent may make such a decision when information about an order of the customer is requested.

At step 210, second apparatus determines that there is a need to get said sensitive information. At step 212, second apparatus 122 transmits to first apparatus 112, a request to get said sensitive information, the request comprising the identifier associated with said sensitive information. For example, the customer information system may request strong authentication information using the identifier. Second apparatus 122 may transmit the request to first apparatus 112 via an internal network of the organization.

At step 214, first apparatus 112 determines whether the request is allowable or not. First apparatus 112 may determine that a number of received requests associated with the identifier is below a threshold. First apparatus 112 may then transmit, responsive to said determining, said sensitive information to second apparatus 122. Alternatively, or in addition, first apparatus 112 may determine that the identifier is valid and transmit the identifier associated with said sensitive information to second network domain 120 of the organization.

At step 216, first apparatus 112 transmits, responsive to receiving the request, said sensitive information to second apparatus 122. For example, strong authentication information of the user may be transmitted from a web server of first network domain 110. The customer information system may thus receive said sensitive information and present that to the agent.

Embodiments of the present disclosure therefore enhance security by enabling exchange of said sensitive information via a third party, without compromising said sensitive information. Hence, a modular service architecture is enabled, wherein less secure service components may be exploited.

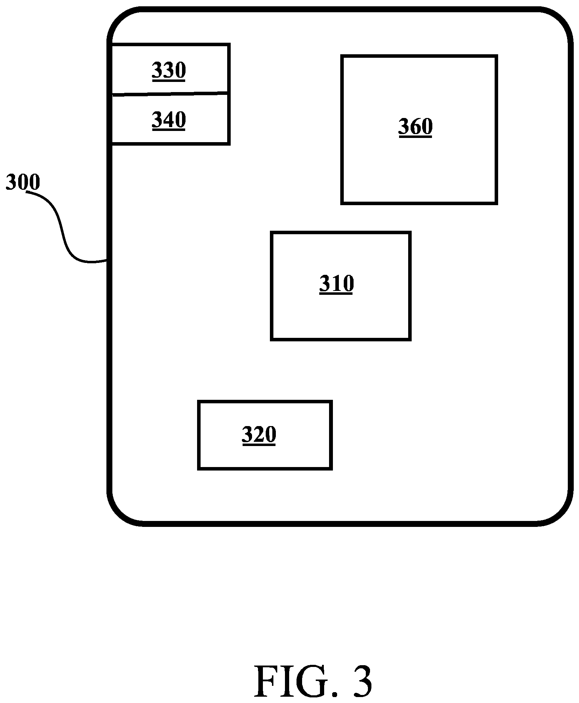

FIG. 3 illustrates an example apparatus capable of supporting at least some embodiments. Illustrated is device 300, which may be configured to perform the herein disclosed process and embodiments. For example, device 300 may be configured to perform actions of first apparatus 112, second apparatus 122 or third apparatus 132. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one AMD Opteron and/or Intel Xeon processor. Processor 310 may comprise at least one application-specific integrated circuit, ASIC. Processor 310 may comprise at least one field-programmable gate array, FPGA. Processor 310 may be means for performing method steps in device 300, and causing performance of the method steps, such as determining, detecting, converting and/or (re)configuring. Processor 310 may be configured, at least in part by computer instructions, to perform actions.

As used in this application, the term circuitry covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise randomaccess memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be non-transitory.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with Ethernet and/or signalling system 7, SS7, standards, for example.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure alarm handling parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIG. 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

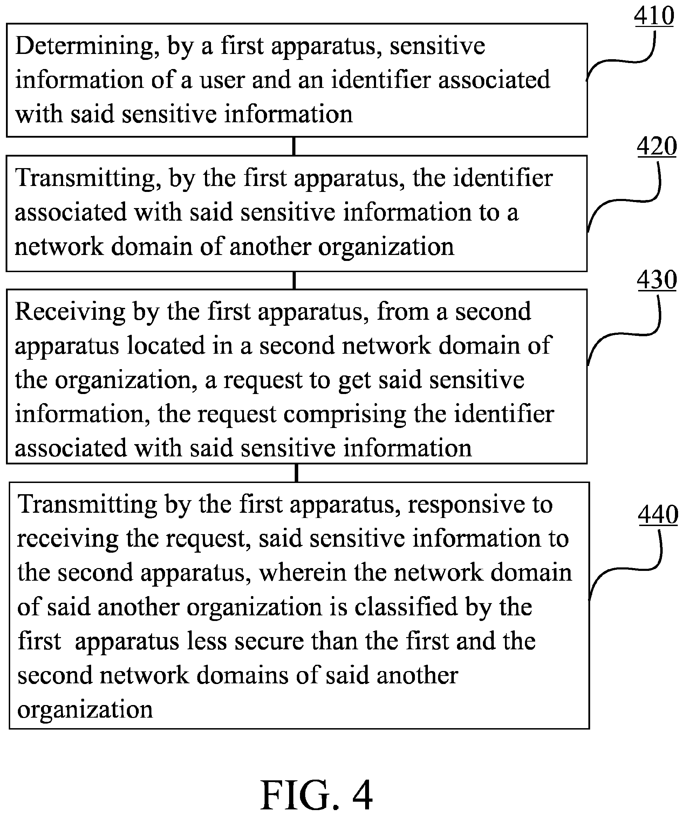

FIG. 4 is a flow graph of a first method in accordance with at least some embodiments. The phases of the illustrated method may be performed for example by first apparatus 112.

At phase 410, the first method comprises determining, by a first apparatus, sensitive information of a user and an identifier associated with said sensitive information, wherein the first apparatus is located in a first network domain of an organization. The first method also comprises, at step 420, transmitting, by the first apparatus, the identifier associated with said sensitive information to a network domain of another organization. At phase, 430, the first method comprises receiving by the first apparatus, from a second apparatus located in a second network domain of the organization, a request to get said sensitive information, the request comprising the identifier associated with said sensitive information. Finally, the first method comprises, at step 440, transmitting by the first apparatus, responsive to receiving the request, said sensitive information to the second apparatus, wherein the network domain of said another organization is classified by the first apparatus as less secure than the first and the second network domains of the organization.

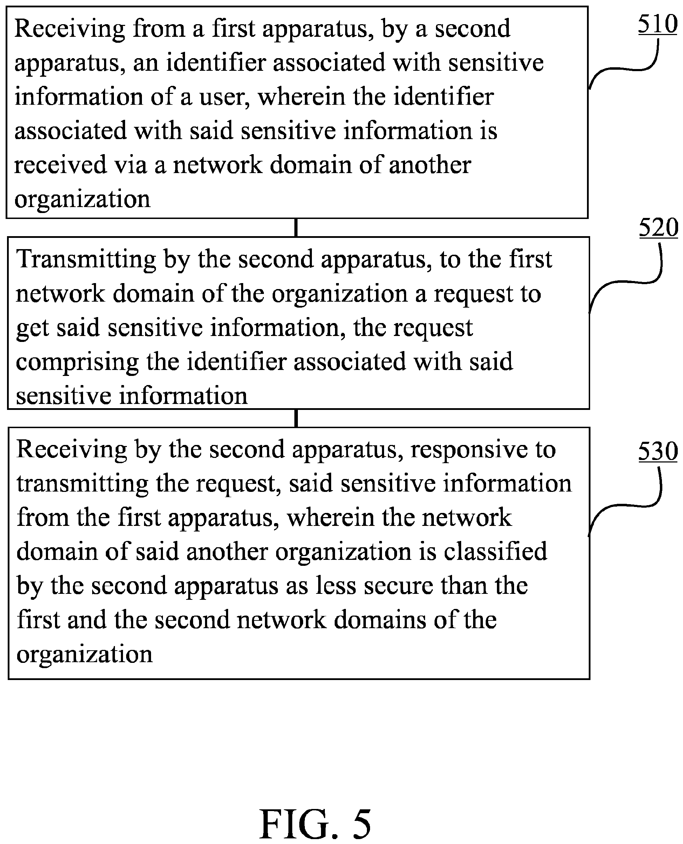

FIG. 5 is a flow graph of a second method in accordance with at least some embodiments. The phases of the illustrated method may be performed for example by second apparatus 122.

At phase 510, receiving from a first apparatus located in a first network domain of an organization, by a second apparatus located in a second network domain of the organization, an identifier associated with sensitive information of a user, wherein the identifier associated with said sensitive information is received via a network domain of another organization. At phase 520, the second method comprises transmitting, by the second apparatus, to the first apparatus in the network domain of the organization, a request to get said sensitive information, the request comprising the identifier associated with said sensitive information. Finally, the second method comprises, at step 530, receiving by the second apparatus, responsive to transmitting the request, said sensitive information from the first apparatus, wherein the network domain of said another organization is less secure than the first and the second network domains of the organization.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in networks of cellular communication providers.

**REFERENCE SIGNS LIST**

| | |
|---|---|
| 110 | First network domain of an organization |
| 112 | First apparatus |
| 120 | Second network domain of an organization |
| 122 | Second apparatus |
| 130 | Network domain of another organization |
| 132 | Third apparatus |
| 202 - 216 | Steps in FIG. 2 |
| 300 - 350 | Structure of the device of FIG. 3 |
| 410 - 440 | Phases of the method of FIG. 4 |
| 510 - 530 | Phases of the method of FIG. 5 |

## Claims

1. A method, comprising:
- determining, by a first apparatus (112), sensitive information of a user and an identifier associated with said sensitive information, wherein the first apparatus (112) is located in a first network domain (110) of an organization;
- transmitting, by the first apparatus (112), the identifier associated with said sensitive information to a network domain of another organization (130);
- receiving by the first apparatus (112), from a second apparatus (122) located in a second network domain (120) of the organization, a request to get said sensitive information, the request comprising the identifier associated with said sensitive information; and
- transmitting by the first apparatus (112), responsive to receiving the request, said sensitive information to the second apparatus (122), wherein the network domain of said another organization (130) is classified by the first apparatus (112) as less secure than the first (110) and the second (120) network domains of the organization.

2. The method according to claim 1, further comprising:
- receiving, by the first apparatus (112), said sensitive information from the user via a webpage.

3. The method according to claim 1 or claim 2, further comprising:
- transmitting, by the first apparatus (112), the identifier associated with said sensitive information to the network domain of said another organization (130) via a chat widget of a chat session, wherein the chat widget is within said another organization.

4. The method according to any of the preceding claims, further comprising:
- transmitting, by the first apparatus (112), the identifier associated with said sensitive information to the network domain of said another organization (130) over the Internet; and
- receiving, by the first apparatus (112), the request comprising the identifier associated with said sensitive information via an internal network of the organization.

5. The method according to any of the preceding claims, further comprising:
- determining, by the first apparatus (112), that a number of received requests associated with the identifier is below a threshold; and
- transmitting by the first apparatus (112), responsive to said determining, said sensitive information to the second network (120) domain of the organization.

6. The method according to any of the preceding claims, further comprising:
- determining, by the first apparatus (112), that the identifier is valid; and
- transmitting, by the first apparatus (112), the identifier associated with said sensitive information to the second network domain (120) of the organization.

7. The method according to any of the preceding claims, further comprising:
- starting by the first apparatus (112), via the network domain of said another organization (130), a communication session with the second apparatus (122) located in the second network domain (120) of the organization; and
- transmitting, by the first apparatus (112), the identifier within the communication session.

8. The method according to any of the preceding claims, wherein said user is associated with an interaction session with said organization.

9. The method according to any of the preceding claims, wherein said sensitive information comprises at least one of authentication information of the user or confidential information of the user.

10. A method, comprising:
- receiving from a first apparatus (112) located in a first network domain (110) of an organization, by a second apparatus (122) located in a second network domain (120) of the organization, an identifier associated with sensitive information of a user, wherein the identifier associated with said sensitive information is received via a network domain of another organization (130);
- transmitting, by the second apparatus (122), to the first network domain (110) of the organization, a request to get said sensitive information, the request comprising the identifier associated with said sensitive information; and
- receiving by the second apparatus (122), responsive to transmitting the request, said sensitive information from the first apparatus (110), wherein the network domain of said another organization (130) is classified by the second apparatus (122) as less secure than the first (110) and the second (120) network domains of the organization.

11. A method according to claim 10, further comprising:
- receiving, by the second apparatus (122), the identifier via a chat interface of an agent.

12. An apparatus (112) comprising at least one processing core and at least one memory storing instructions that, when executed by the at least one processing core, cause the apparatus (112) at least to:
- determine sensitive information of a user and an identifier associated with said sensitive information, wherein the apparatus (112) is located in a first network domain (110) of an organization;
- transmit the identifier associated with said sensitive information to a network domain of another organization (130);
- receive, from a second apparatus (122) located in a second network domain (120) of the organization, a request to get said sensitive information, the request comprising the identifier associated with said sensitive information; and
- transmit, responsive to receiving the request, said sensitive information to the second apparatus (122), wherein the network domain of said another organization (130) is classified by the apparatus (112) as less secure than the first (110) and the second (120) network domains of the organization.

13. An apparatus (122) comprising at least one processing core and at least one memory storing instructions that, when executed by the at least one processing core, cause the apparatus (122) at least to:
- receive from a first apparatus (112) located in a first network domain (110) of an organization an identifier associated with sensitive information of a user, wherein the identifier associated with said sensitive information is received via a network domain (130) of another organization;
- transmit to the first network domain (110) of the organization, a request to get said sensitive information, the request comprising the identifier associated with said sensitive information; and
- receive, responsive to transmitting the request, said sensitive information from the first apparatus (112), wherein the network domain of said another organization (130) is classified by the apparatus (122) as less secure than the first (110) and the second (120) network domains of the organization.

14. A computer program comprising instructions which, when the program is executed by an apparatus (112), cause the apparatus (112) to carry out:
- determining sensitive information of a user and an identifier associated with said sensitive information, wherein the apparatus (112) is located in a first network domain (110) of an organization;
- transmitting the identifier associated with said sensitive information to a network domain of another organization (130);
- receiving, from a second apparatus (122) located in a second network domain (120) of the organization, a request to get said sensitive information, the request comprising the identifier associated with said sensitive information; and
- transmitting, responsive to receiving the request, said sensitive information to the second apparatus (122), wherein the network domain of said another organization (130) is classified by the apparatus (112) as less secure than the first (110) and the second (120) network domains of the organization.

15. A computer program comprising instructions which, when the program is executed by an apparatus (122), cause the apparatus (122) to carry out:
- receiving from a first apparatus (112) located in a first network domain (110) of an organization an identifier associated with sensitive information of a user, wherein the identifier associated with said sensitive information is received via a network domain of another organization (130);
- transmitting to the first network domain (110) of the organization, a request to get said sensitive information, the request comprising the identifier associated with said sensitive information; and
- receiving, responsive to transmitting the request, said sensitive information from the first apparatus (112), wherein the network domain of said another organization (130) is classified by the apparatus (122) as less secure than the first (110) and the second (120) network domains of the organization.

## Patentansprüche

1. Verfahren, umfassend:
- Ermitteln, durch eine erste Einrichtung (112), von sensiblen Informationen eines Benutzers und einer diesen sensiblen Informationen zugeordneten Kennung, wobei sich die erste Einrichtung (112) in einer ersten Netzwerkdomäne (110) einer Organisation befindet;
- Übertragen, durch die erste Einrichtung (112), der den sensiblen Informationen zugeordneten Kennung an eine Netzwerkdomäne einer anderen Organisation (130);
- Empfangen, durch die erste Einrichtung (112) von einer zweiten Einrichtung (122), die sich in einer zweiten Netzwerkdomäne (120) der Organisation befindet, einer Anfrage zum Abrufen der sensiblen Informationen, wobei die Anfrage die den sensiblen Informationen zugeordnete Kennung umfasst; und
- Übertragen, durch die erste Einrichtung (112), als Reaktion auf den Empfang der Anfrage, der sensiblen Informationen an die zweite Einrichtung (122), wobei die Netzwerkdomäne der anderen Organisation (130) durch die erste Einrichtung (112) als weniger sicher als die erste (110) und die zweite (120) Netzwerkdomäne der Organisation eingestuft wird.

2. Verfahren nach Anspruch 1, weiter umfassend:
- Empfangen, durch die erste Einrichtung (112), der sensiblen Informationen vom Benutzer über eine Webseite.

3. Verfahren nach Anspruch 1 oder Anspruch 2, weiter umfassend:
- Übertragen, durch die erste Einrichtung (112), der den sensiblen Informationen zugeordneten Kennung an die Netzwerkdomäne der anderen Organisation (130) über ein Chat-Widget einer Chat-Sitzung, wobei sich das Chat-Widget innerhalb der anderen Organisation befindet.

4. Verfahren nach einem der vorstehenden Ansprüche, weiter umfassend:
- Übertragen, durch die erste Einrichtung (112), der den sensiblen Informationen zugeordneten Kennung an die Netzwerkdomäne der anderen Organisation (130) über das Internet; und
- Empfangen, durch die erste Einrichtung (112), der Anfrage, die die den sensiblen Informationen zugeordnete Kennung umfasst, über ein internes Netzwerk der Organisation.

5. Verfahren nach einem der vorstehenden Ansprüche, weiter umfassend:
- Ermitteln, durch die erste Einrichtung (112), dass die Anzahl der empfangenen Anfragen, die der Kennung zugeordnet sind, unter einem Schwellenwert liegt; und
- Übertragen, durch die erste Einrichtung (112), als Reaktion auf diese Ermittlung, der sensiblen Informationen an die zweite Netzwerkdomäne (120) der Organisation.

6. Verfahren nach einem der vorstehenden Ansprüche, weiter umfassend:
- Ermitteln, durch die erste Einrichtung (112), dass die Kennung gültig ist; und
- Übertragen, durch die erste Einrichtung (112), der den sensiblen Informationen zugeordneten Kennung an die zweite Netzwerkdomäne (120) der Organisation.

7. Verfahren nach einem der vorstehenden Ansprüche, weiter umfassend:
- Starten, durch die erste Einrichtung (112), einer Kommunikationssitzung mit der zweiten Einrichtung (122), die sich in der zweiten Netzwerkdomäne (120) der Organisation befindet, über die Netzwerkdomäne der anderen Organisation (130); und
- Übertragen, durch die erste Einrichtung (112), der Kennung innerhalb der Kommunikationssitzung.

8. Verfahren nach einem der vorstehenden Ansprüche, wobei der Benutzer einer Interaktionssitzung mit der Organisation zugeordnet ist.

9. Verfahren nach einem der vorstehenden Ansprüche, wobei die sensiblen Informationen mindestens eines von Authentifizierungsinformationen des Benutzers oder vertraulichen Informationen des Benutzers umfassen.

10. Verfahren, umfassend:
- Empfangen, durch eine zweite Einrichtung (122), die sich in einer zweiten Netzwerkdomäne (120) der Organisation befindet, einer Kennung, die sensiblen Informationen eines Benutzers zugeordnet ist, von einer ersten Einrichtung (112), die sich in einer ersten Netzwerkdomäne (110) einer Organisation befindet, wobei die Kennung, die den sensiblen Informationen zugeordnet ist, über eine Netzwerkdomäne einer anderen Organisation (130) empfangen wird;
- Übertragen, durch die zweite Einrichtung (122), einer Anfrage zum Abrufen der sensiblen Informationen an die erste Netzwerkdomäne (110) der Organisation, wobei die Anfrage die den sensiblen Informationen zugeordnete Kennung umfasst; und
- Empfangen, durch die zweite Einrichtung (122) als Reaktion auf das Übertragen der Anfrage, der sensiblen Informationen von der ersten Einrichtung (110), wobei die Netzwerkdomäne der anderen Organisation (130) durch die zweite Einrichtung (122) als weniger sicher als die erste (110) und die zweite (120) Netzwerkdomäne der Organisation eingestuft wird.

11. Verfahren nach Anspruch 10, weiter umfassend:
- Empfangen, durch die zweite Einrichtung (122), der Kennung über eine Chat-Schnittstelle eines Agenten.

12. Einrichtung (112) umfassend mindestens einen Prozessorkern und mindestens einen Speicher, der Anweisungen speichert, die, wenn sie von dem mindestens einen Prozessorkern ausgeführt werden, die Einrichtung (112) mindestens veranlassen zum:
- Ermitteln von sensiblen Informationen eines Benutzers und einer diesen sensiblen Informationen zugeordneten Kennung, wobei sich die Einrichtung (112) in einer ersten Netzwerkdomäne (110) einer Organisation befindet;
- Übertragen der den sensiblen Informationen zugeordneten Kennung an eine Netzwerkdomäne einer anderen Organisation (130);
- Empfangen, von einer zweiten Einrichtung (122), die sich in einer zweiten Netzwerkdomäne (120) der Organisation befindet, einer Anfrage zum Abrufen der sensiblen Informationen, wobei die Anfrage die den sensiblen Informationen zugeordnete Kennung umfasst; und
- Übertragen, als Reaktion auf den Empfang der Anfrage, der sensiblen Informationen an die zweite Einrichtung (122), wobei die Netzwerkdomäne der anderen Organisation (130) durch die Einrichtung (112) als weniger sicher als die erste (110) und die zweite (120) Netzwerkdomäne der Organisation eingestuft wird.

13. Einrichtung (122) umfassend mindestens einen Prozessorkern und mindestens einen Speicher, der Anweisungen speichert, die, wenn sie von dem mindestens einen Prozessorkern ausgeführt werden, die Einrichtung (122) mindestens veranlassen zum:
- Empfangen einer Kennung, die sensiblen Informationen eines Benutzers zugeordnet ist, von einer ersten Einrichtung (112), die sich in einer ersten Netzwerkdomäne (110) einer Organisation befindet, wobei die Kennung, die den sensiblen Informationen zugeordnet ist, über eine Netzwerkdomäne (130) einer anderen Organisation empfangen wird;
- Übertragen einer Anfrage zum Abrufen der sensiblen Informationen an die erste Netzwerkdomäne (110) der Organisation, wobei die Anfrage die den sensiblen Informationen zugeordnete Kennung umfasst; und
- Empfangen als Reaktion auf das Übertragen der Anfrage, der sensiblen Informationen von der ersten Einrichtung (112), wobei die Netzwerkdomäne der anderen Organisation (130) durch die Einrichtung (122) als weniger sicher als die erste (110) und die zweite (120) Netzwerkdomäne der Organisation eingestuft wird.

14. Computerprogramm, das Anweisungen umfasst, die, wenn sie von einer Einrichtung (112) ausgeführt werden, die Einrichtung (112) mindestens veranlassen zum:
- Ermitteln von sensiblen Informationen eines Benutzers und einer diesen sensiblen Informationen zugeordneten Kennung, wobei sich die Einrichtung (112) in einer ersten Netzwerkdomäne (110) einer Organisation befindet;
- Übertragen der den sensiblen Informationen zugeordneten Kennung an eine Netzwerkdomäne einer anderen Organisation (130);
- Empfangen, von einer zweiten Einrichtung (122), die sich in einer zweiten Netzwerkdomäne (120) der Organisation befindet, einer Anfrage zum Abrufen der sensiblen Informationen, wobei die Anfrage die den sensiblen Informationen zugeordnete Kennung umfasst; und
- Übertragen, als Reaktion auf den Empfang der Anfrage, der sensiblen Informationen an die zweite Einrichtung (122), wobei die Netzwerkdomäne der anderen Organisation (130) durch die Einrichtung (112) als weniger sicher als die erste (110) und die zweite (120) Netzwerkdomäne der Organisation eingestuft wird.

15. Computerprogramm, das Anweisungen umfasst, die, wenn sie von einer Einrichtung (122) ausgeführt werden, die Einrichtung (122) mindestens veranlassen zum:
- Empfangen einer Kennung, die sensiblen Informationen eines Benutzers zugeordnet ist, von einer ersten Einrichtung (112), die sich in einer ersten Netzwerkdomäne (110) einer Organisation befindet, wobei die Kennung, die den sensiblen Informationen zugeordnet ist, über eine Netzwerkdomäne einer anderen Organisation (130) empfangen wird;
- Übertragen einer Anfrage zum Abrufen der sensiblen Informationen an die erste Netzwerkdomäne (110) der Organisation, wobei die Anfrage die den sensiblen Informationen zugeordnete Kennung umfasst; und
- Empfangen als Reaktion auf das Übertragen der Anfrage, der sensiblen Informationen von der ersten Einrichtung (112), wobei die Netzwerkdomäne der anderen Organisation (130) durch die Einrichtung (122) als weniger sicher als die erste (110) und die zweite (120) Netzwerkdomäne der Organisation eingestuft wird.

## Revendications

1. Procédé, comprenant :
- la détermination, par un premier appareil (112), d'informations sensibles d'un utilisateur et d'un identifiant associé auxdites informations sensibles, dans lequel le premier appareil (112) est situé dans un premier domaine réseau (110) d'une organisation ;
- la transmission, par le premier appareil (112), de l'identifiant associé auxdites informations sensibles à un domaine réseau d'une autre organisation (130) ;
- la réception par le premier appareil (112), en provenance d'un second appareil (122) situé dans un second domaine réseau (120) de l'organisation, d'une requête visant à obtenir lesdites informations sensibles, la requête comprenant l'identifiant associé auxdites informations sensibles ; et
- la transmission par le premier appareil (112), en réponse à la réception de la requête, desdites informations sensibles au second appareil (122), dans lequel le domaine réseau de ladite autre organisation (130) est classé par le premier appareil (112) comme moins sécurisé que le premier (110) et le second (120) domaine réseau de l'organisation.

2. Procédé selon la revendication 1, comprenant en outre :
- la réception, par le premier appareil (112), desdites informations sensibles de l'utilisateur via une page web.

3. Procédé selon la revendication 1 ou la revendication 2 comprenant en outre :
- la transmission, par le premier appareil (112), de l'identifiant associé auxdites informations sensibles au domaine réseau de ladite autre organisation (130) via un widget de chat d'une session de chat, dans lequel le widget de chat est situé au sein de ladite autre organisation.

4. Procédé selon l'une quelconque des revendications précédentes, comprenant en outre :
- la transmission, par le premier appareil (112), de l'identifiant associé auxdites informations sensibles au domaine réseau de ladite autre organisation (130) via Internet ; et
- la réception, par le premier appareil (112), de la requête comprenant l'identifiant associé auxdites informations sensibles via un réseau interne de l'organisation.

5. Procédé selon l'une quelconque des revendications précédentes, comprenant en outre :
- la détermination, par le premier appareil (112), qu'un nombre de requêtes reçues associées à l'identifiant est inférieur à un seuil ; et
- la transmission par le premier appareil (112), en réponse à ladite détermination, desdites informations sensibles au second domaine réseau (120) de l'organisation.

6. Procédé selon l'une quelconque des revendications précédentes, comprenant en outre :
- la détermination, par le premier appareil (112), que l'identifiant est valide ; et
- la transmission, par le premier appareil (112), de l'identifiant associé auxdites informations sensibles au second domaine réseau (120) de l'organisation.

7. Procédé selon l'une quelconque des revendications précédentes, comprenant en outre :
- le lancement par le premier appareil (112), via le domaine réseau de ladite autre organisation (130), d'une session de communication avec le second appareil (122) situé dans le second domaine réseau (120) de l'organisation ; et
- la transmission, par le premier appareil (112), de l'identifiant au sein de la session de communication.

8. Procédé selon l'une quelconque des revendications précédentes, dans lequel ledit utilisateur est associé à une session d'interaction avec ladite organisation.

9. Procédé selon l'une quelconque des revendications précédentes, dans lequel lesdites informations sensibles comprennent au moins une parmi des informations d'authentification de l'utilisateur ou des informations confidentielles de l'utilisateur.

10. Procédé, comprenant :
- la réception d'un premier appareil (112) situé dans un premier domaine réseau (110) d'une organisation, par un second appareil (122) situé dans un second domaine réseau (120) de l'organisation, d'un identifiant associé à des informations sensibles d'un utilisateur, dans lequel l'identifiant associé auxdites informations sensibles est reçu via un domaine réseau d'une autre organisation (130) ;
- la transmission, par le second appareil (122), au premier domaine réseau (110) de l'organisation, d'une requête pour obtenir lesdites informations sensibles, la requête comprenant l'identifiant associé auxdites informations sensibles ; et
- la réception par le second appareil (122), en réponse à une transmission de la requête, desdites informations sensibles du premier appareil (110), dans lequel le domaine réseau de ladite autre organisation (130) est classé par le second appareil (122) comme moins sécurisé que le premier (110) et le second (120) domaine réseau de l'organisation.

11. Procédé selon la revendication 10, comprenant en outre :
- la réception, par le second appareil (122), de l'identifiant via une interface de chat d'un agent.

12. Appareil (112) comprenant au moins un cœur de traitement et au moins une mémoire stockant des instructions qui, lorsqu'elles sont exécutées par l'au moins un cœur de traitement, amènent l'appareil (112) au moins à :
- déterminer des informations sensibles d'un utilisateur et un identifiant associé auxdites informations sensibles, dans lequel l'appareil (112) est situé dans un premier domaine réseau (110) d'une organisation ;
- transmettre l'identifiant associé auxdites informations sensibles à un domaine réseau d'une autre organisation (130) ;
- recevoir, d'un second appareil (122) situé dans un second domaine réseau (120) de l'organisation, une requête pour obtenir lesdites informations sensibles, la requête comprenant l'identifiant associé auxdites informations sensibles ; et
- transmettre, en réponse à la réception de la requête, lesdites informations sensibles au second appareil (122), dans lequel le domaine réseau de ladite autre organisation (130) est classé par l'appareil (112) comme moins sécurisé que le premier (110) et le second (120) domaine réseau de l'organisation.

13. Appareil (122) comprenant au moins un cœur de traitement et au moins une mémoire stockant des instructions qui, lorsqu'elles sont exécutées par l'au moins un cœur de traitement, amènent l'appareil (122) au moins à :
- recevoir d'un premier appareil (112) situé dans un premier domaine réseau (110) d'une organisation un identifiant associé à des informations sensibles d'un utilisateur, dans lequel l'identifiant associé auxdites informations sensibles est reçu via un domaine réseau (130) d'une autre organisation ;
- transmettre au premier domaine réseau (110) de l'organisation une requête pour obtenir lesdites informations sensibles, la requête comprenant l'identifiant associé auxdites informations sensibles ; et
- recevoir, en réponse à la transmission de la requête, lesdites informations sensibles en provenance du premier appareil (112), dans lequel le domaine réseau de ladite autre organisation (130) est classé par l'appareil (122) comme moins sécurisé que le premier (110) et le second (120) domaine réseau de l'organisation.

14. Programme informatique comprenant des instructions qui, lorsque le programme est exécuté par un appareil (112), amènent l'appareil (112) à réaliser :
- la détermination d'informations sensibles d'un utilisateur et d'un identifiant associé auxdites informations sensibles, dans lequel l'appareil (112) est situé dans un premier domaine réseau (110) d'une organisation ;
- la transmission de l'identifiant associé auxdites informations sensibles à un domaine réseau d'une autre organisation (130) ;
- la réception, en provenance d'un second appareil (122) situé dans un second domaine réseau (120) de l'organisation, d'une requête pour obtenir lesdites informations sensibles, la requête comprenant l'identifiant associé auxdites informations sensibles ; et
- la transmission, en réponse à la réception de la requête, desdites informations sensibles au second appareil (122), dans lequel le domaine réseau de ladite autre organisation (130) est classé par l'appareil (112) comme moins sécurisé que le premier (110) et le second (120) domaine réseau de l'organisation.

15. Programme informatique comprenant des instructions qui, lorsque le programme est exécuté par un appareil (122), amènent l'appareil (122) à réaliser :
- la réception d'un premier appareil (112) situé dans un premier domaine réseau (110) d'une organisation un identifiant associé à des informations sensibles d'un utilisateur, dans lequel l'identifiant associé auxdites informations sensibles est reçu via un domaine réseau d'une autre organisation (130) ;
- la transmission au premier domaine réseau (110) de l'organisation d'une requête pour obtenir lesdites informations sensibles, la requête comprenant l'identifiant associé auxdites informations sensibles ; et
- la réception, en réponse à une transmission de la requête, desdites informations sensibles du premier appareil (112), dans lequel le domaine réseau de ladite autre organisation (130) est classé par l'appareil (122) comme moins sécurisé que le premier (110) et le second (120) domaine réseau de l'organisation.
